(19) Europäisches Patentamt
European Patent Office
Office européen des brevets

(11) Publication number: **0 053 344**
**B2**

(12) **NEW EUROPEAN PATENT SPECIFICATION**

(45) Date of publication of the new patent specification: **23.11.88**

(51) Int. Cl.[4]: **C 08 G 75/02**

(21) Application number: **81109862.3**

(22) Date of filling: **24.11.81**

(54) **Stabilized polyphenylene sulfide and method for producing same.**

(30) Priority: **27.11.80 JP 165896/80**

(43) Date of publication of application:
**09.06.82 Bulletin 82/23**

(45) Publication of the grant of the patent:
**15.05.85 Bulletin 85/20**

(45) Mention of the opposition decision:
**23.11.88 Bulletin 88/47**

(84) Designated Contracting States:
**DE FR GB**

(56) References cited:
**EP-A-0 033 906**
**DE-A-2 009 323**
**US-A-3 354 129**
**US-A-3 395 132**
**US-A-3 839 301**
**US-A-4 102 875**

**Journal of Polymer Science, Vol. 11, p. 2793-2811 (1973)**
**Journal of Polymer Science, Vol. 12, p. 1301-1311 (1974)**

(73) Proprietor: **TORAY INDUSTRIES, INC., 2, Nihonbashi- Muromachi 2-chome Chuo- ku, Tokyo 103 (JP)**

(72) Inventor: **Asakura, Toshiyuki, No. 2-10, Sonoyama, Ohtsu- shi (JP)**
Inventor: **Kobayashi, Hiroaki, No. 2-15, Sonoyama, Ohtsu- shi (JP)**
Inventor: **Noguchi, Yukio, No. 805, Kitazakura Yasu- cho, Yasu- gun Shiga- ken (JP)**

(74) Representative: **Brehm, Hans- Peter, Dr. Dipl.- Chem., Patentanwälte Kern, Brehm & Partner Albert- Rosshaupter- Strasse 73, D-8000 München 70 (DE)**

**EP 0 053 344 B2**

LIBER, STOCKHOLM 1988

**Description**

This invention relates to a stabilized poly(phenylene sulfide) comprising recurring units

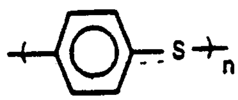

with n ⩾ 20 and further comprising a stabilizing agent, viz. an aromatic compound substituted with at least one electron attracting group. Further this invention provides a method of preparing said stabilized poly(phenylene sulfide).

A stabilized poly(phenylene sulfide) of said type has become known from US-A-3 839 301. In order to prepare the known product, a mixture of polymer and sulfur-containing compounds is heated to a temperature which is below the melting point of the chosen polymeric product for a period of time sufficient to effect cure and reduce the melt flow. The melt flow modifiers or curing agents that can be employed are sulfur-containing compounds chosen from sulfuric acid and selected sulfonic acids and sulfonyl halides. Specifically, sulfuric acid and as a typical, representative disulfonic acid, m-benzenedisulfonic acid, have been found to be effective in reducing polymer melt flow and effecting cure. The disulfonic acids and sulfuric acid are presently preferred. The sulfonyl halides are less preferred because of the evolution of HCl and accompanying corrosion and pollution problems. Due to the selected sulfur containing compounds, said known curing reaction provides bonds between the "S"-atom of the sulfur-containing compound and the backbone chain or branch chain of the poly(phenylene sulfide). The known stabilizing method is essentially a curing treatment which reduces the melt flow, but increases the cross-linking and raises the viscosity of the product considerably.

In recent years poly(phenylene sulfide) has been widely employed in the fields of coating and injection molding. Here a general practice comprises curing the polymers in air in order to enhance cross-linking or branching of the polymer chain. Starting with a highly cross-linked poly(phenylene sulfide), for example such as according to US-A-3 839 301 is not disadvantageous in said type of use. However, nowadays the use of poly(phenylene sulfides), particularly those having high (linear) molecular weights, is expected to be further expanded into such end use applications as films, yarns, shaped articles, molded products, etc. In such applications of the high molecular weight polymers, it is important that the films, yarns and other products should be resistant to oxidation, resistant to weathering or ultraviolet radiation and should have a low emission of corrosive gases. It is also of essential importance that the polymer possesses good viscosity stability during melt spinning, molding and other process operations. Poly(phenylene sulfides) presently known in the art, however, do not possess these desired properties and therefore, may not be advantageously utilized in many end use applications.

An essential object of the present invention is therefore to provide a stabilized poly(phenylene sulfide) which has good melt stability, weatherability, resistance to oxidation and low corrosive gas emission, with substantial elimination of the disadvantages inherent in the conventional poly(phenylene sulfides).

Another important object of the present invention is to provide a method of preparing a stabilized poly(phenylene sulfide) of the above-described type.

To accomplish these and other objects, according to the preferred embodiments of the present invention, there are provided a stabilized poly(phenylene sulfide) and a method of preparing the same.

The stabilized poly(phenylene sulfide) according to the present invention comprising recurring units

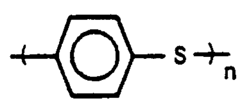

with n ⩾ 20 and further comprising a stabilizing agent, viz. an aromatic compound substituted with at least one electron attracting group, is characterized in that said electron attracting group is selected from $-SO_2-$, -CO-, -CONH-, $-NO_2$, $-SO_3R$ and -COOR, wherein R represents H, $C_1$- to $C_8$-alkyl group, phenyl group, substituted phenyl group or alkali metal; said substituted aromatic compound is covalently bound to the backbone chain and/or to a branch chain of the poly(phenylene sulfide) via a "C"-atom of the aromatic ring of the stabilizing agent; and said stabilizing agent is present in an amount from 0.05 to 10 mole-% per phenylene sulfide unit.

According to the inventive method of preparing said stabilized poly(phenylene sulfide) a poly(phenylene sulfide) consisting mainly of recurring units

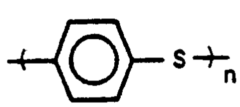

with n ⩾ 20 is reacted with 0.05 to 20 mole-% per said phenylene sulfide unit of a substituted aromatic compound having at least one halogen atom and at least one electron attracting group selected from $-SO_2-$, -CO-, -CONH-, $-NO_2$, $-SO_3R$ and -COOR, wherein R represents H, $C_1$- to $C_8$-alkyl group, phenyl group, substituted phenyl group or alkali metal, directly bound to said aromatic ring, in order to produce a covalent bond between the backbone chain and/or a branch chain of said poly(phenylene sulfide) and a carbon atom of said aromatic ring.

Preferably the substituted aromatic compound is selected from the following group of compounds, including

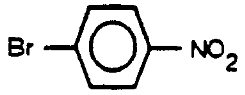,

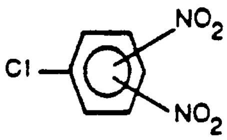

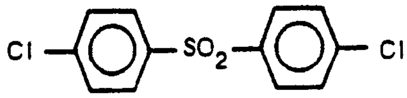,

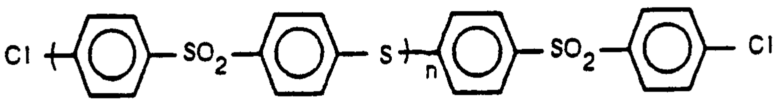 (n ⩾ 1),

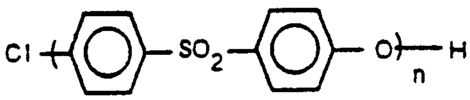 (n ⩾ 1),

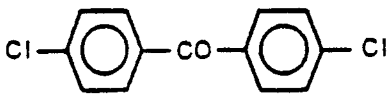,

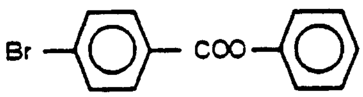

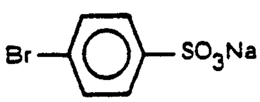 or

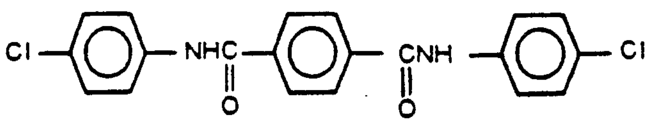.

In the following the invention is explained in more detail.

The poly(phenylene sulfide) according to the present invention is mainly composed of a constituent unit represented by the formula

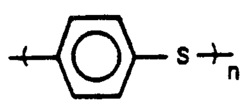.

This main constituent,

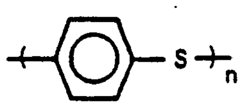,

comprises at least about 90 mole-%, and preferably at least about 95 mole-%, and the remaining constituent units may be units which are capable of random copolymerization, for example,

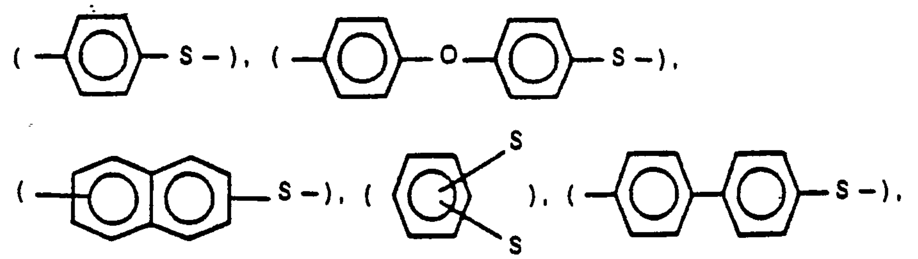

etc.

The average chain length of the main constituent units is required to be at least 20, i.e. where the polymer is represented by the formula

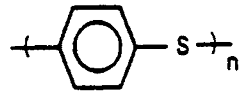

and n is 20 or more. Values less than 20 are not preferred, since the features inherent in poly(phenylene sulfide), such as high crystallinity characteristics, high heat resistance characteristics, etc. cannot be fully developed at lower molecular weights.

The stabilized poly(phenylene sulfide) further contains 0.05 to 10 mole-%, and preferably 0.05 to 2 mole-% of an aromatic compound, comprising one to four substituent groups having an electron attracting functional characteristic bonded directly to a phenyl core, a naphthyl core and the like. The electron attractivity is based on the non-substituted phenyl group. Hammett's $\sigma$ value, frequently used in the substitution reaction of the aromatic ring, may serve as a measure of the electron attractivity. For the electron attracting group as described above, those represented by $-SO_2-$, -CO-, -CONH-, $-NO_2$, $-SO_3R$ and -COOR, wherein R represents H, lower alkyl group, phenyl group, substituted phenyl group or alkaline metal, are presently preferred.

Examples of the aromatic compounds having the electron attracting group(s) and contained in the stabilized poly(phenylene sulfide) include:

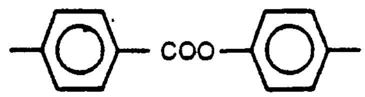

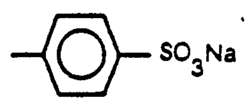

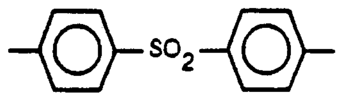

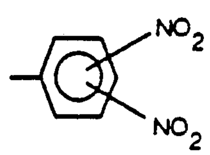

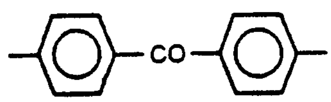

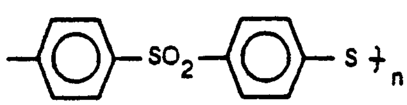

$(n \geqslant 1)$

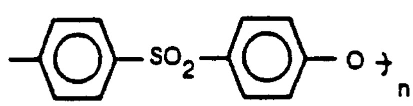

$(n \geqslant 1)$

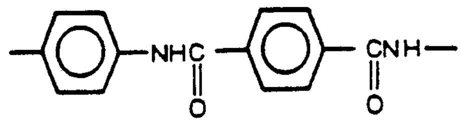

In the stablized poly(phenylene sulfide) the aromatic compound having the electron attracting group(s) must be present in the chain ends or branched chains or in the main chain in order to provide the bast stabilizing efficiency. A comparable stabilizing effect may be obtained by mixing the poly(phenylene sulfide) comprising said chemically bonded aromatic compound with other polymers, for example with untreated poly(phenylene sulfide). The aromatic constituent having the electron attractive group(s) should preferably be present in the range of 0.05 to 2 mole-%. It this aromatic compound is present in an amount less than the above range, the stabilizing effect is reduced, while if the content is excessive. particularly exceeding 10 mole-%, the melting point, glass transition temperature and other properties are changed, thereby undesirably effecting the properties inherent in conventional poly(phenylene sulfide), although the stabilizing effect may still be produced. For example, in poly(phenylene sulfide) having the formula

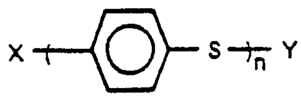 where n equals 200 and X = Y = 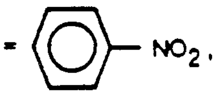

the content of the aromatic compound having the electron attracting group in the polymer amounts preferably 1 mole-%.

The stabilized poly(phenylene sulfide) preferably has a melting point in the range of about 250°C to 350°C, further preferably has a viscosity greater than about 10 Pa·s measured at a temperature of 300°C, and further preferable has a shear rate of about 200 $sec^{-1}$.

According to a preferred method the poly(phenylene sulfide) is prepared by reacting dichlorobenzene with sodium sulfide in a polar solvent to cause the chain length, represented by the formula

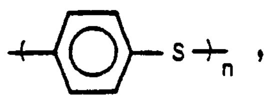 ,

to be greater than n = 20 and then further introducing the aromatic compound containing the electron attracting group(s). The aromatic compound containing the electron attracting group(s) may be reacted with the untreated poly(phenylene sulfide) during polymerization or after the completion of polymerization.

The aromatic compound, should be one containing at least one electron attracting group and further containing at least one halogen substituent, represented by the formula

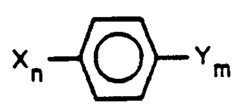

in which

X is Cl or Br, and
n = 1 to 4, and
Y is a substituent containing at least one electron attracting group selected from the groups consisting of $-SO_2-$, -CO-, -CONH-, $-NO_2$, $-SO_3R$ and -COOR, wherein R represents alkali metal, H, $C_1$- to $C_8$-alkyl group, a phenyl or a substituted phenyl group and
m = 1 to 3.

In such aromatic compounds, the halogen substituent is more activated than the halogen atoms in dichlorobenzene so that it may be readily subjected to the substitution reaction. Therefore, it is more effective to employ a process in which the aromatic compound containing the electron attracting group(s) is reacted at a later stage of polymerization after making the chain length such that in the chain represented by

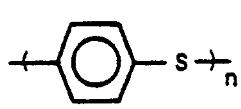

n is greater than 20 through isolation of the polymer. Aromatic compounds, suited for use in the present invention include, for example, the following compounds:

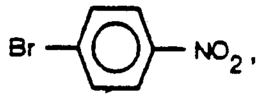

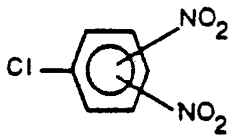

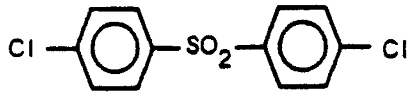

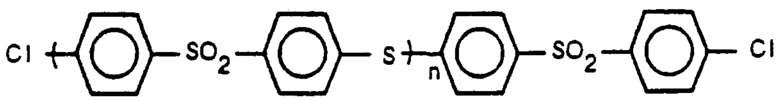 (n ≥ 1)

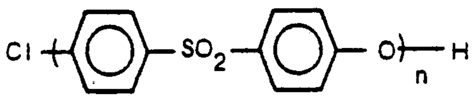 (n ≥ 1)

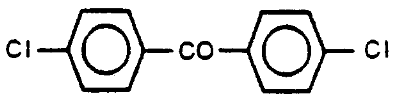

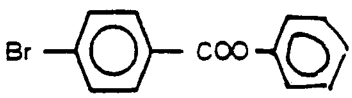

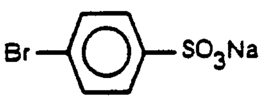 and

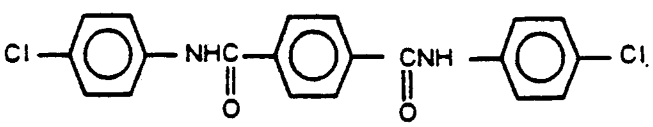

Where the polymerization of the poly(phenylene sulfide) is effected by reacting dichlorobenzene and sodium sulfide, with N-methyl-pyrrolidone as the solvent, the molar ratio of the monomers may be in the range of 0.90 to 1.20. The reaction may be carried out under pressurized conditions at 250° C to 280° C after dehydration of the system. The

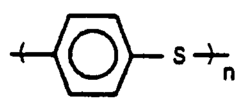

chain length in the polymer during the reaction or after reaction may be determined by measurement of the molecular weight of the isolated polymer. The aromatic halogen compound containing the electron attracting group may be added to the reaction system during stirring, in the course of polymerization, after completion of polymerization, or after isolation of the polymer. Preferred is a reaction within several hours in the temperature range of about 150°C to 280°C. In said reaction, the optimum amount of aromatic halogen compound containing the electron attracting group ranges from about 0.05 to 20 mole-% per poly(phenylene sulfide) unit. If the added amount exceeds said range, the recovery is impaired in the unreacted state. To recover the polymer after reaction, conventional procedures may be used, such as discharging the system into water with subsequent filtration and washing with water or removal of solvent through flushing followed by water washing, etc.

The polymerization and reaction as described above, may be effected in the presence of an alkaline metal salt of a carbon acid and hydroxy alkali hydroxide as polymerization modifiers, as disclosed for example, in Japanese Patent Publication 52-12 240.

To achieve further reaction of the polymer after isolation, it is possible to subject the polymer to the reaction in a polar solvent such as N-methylpyrrolidone, etc., or, in appropriate cases, in the presence of a

polymerization modifier such as alkali hydroxide conventionally employed during polymerizaton.

Although the present invention may be achieved by the representative methods described above, a similar effect can be achieved to a certain extent by mixing unmodified poly(phenylene sulfide) with a separately prepared poly(phenylene sulfide) and reacted with

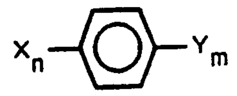 .

Where this alternative method is used, the content of the aromatic compound contained in the mixed polymer is preferably in the range from about 0.05 to 10 mole-%.

According to the present invention the stabilization of the poly(phenylene sulfide) seems to be related to the radical mechanisms, although this has not been proven. However, one of the effects achieved with he present invention is the increased stability, which is demonstrated by the reduced degree of cross-linking during heating the polymer in air. More specifically, the oxidizing cross-linking characteristics inherent in poly(phenylene sulfide) are suppressed, and through the present invention it is possible to collect and reuse molded products. The long term heat stability of products produced from a polymer according to the present invention is also improved. When molded articles produced from conventional, unmodified poly(phenylene sulfide) are allowed to stand in air at high temperatures, the articles become brittle, with a reduction in elongation, due to the cross-linking characteristics which are an inherent feature if the polymer. Such undesirable properties are not present in products molded from polymers obtained according to the present invention. Furthermore, the polymer according to the present invention provides an improved weatherability and/or an improved durability to ultraviolet radiation which extends the useful life time of molded articles produced for outdoor application.

Moreover, in the use of the polymer according to the present invention, any viscosity reduction, which occurs in the molten state due to the cleavage of the polymer chains, is suppressed; further the production of volatile low molecular weight compounds, including inorganic gases containing sulphur, is reduced, while gel formation in the molded articles may also be reduced.

As may be seen from the foregoing description, since the polymer of the present invention is stabilized against such forms of energy as heat, ultraviolet radiation, oxidation, etc., there is presented a polymer suitable for end uses in which heat resistance, light resistance, viscosity stability, gas emission reduction, etc. are required. Such end uses include films, yarns, injection molded articles and the like. According to a further end use a powder may be formed from said stabilized poly(phenylene sulfide) and said powder may be used for the encapsulation of electronic parts, compounds and the like. The stabilized polymer may be used to produce such improved end use products without impairing the superior mechanical, thermal, chemical and electrical characteristics inherent in poly(phenylene sulfide). In addition, the properties of the polymer according to the present invention are not impaired, even when an inorganic filler is added to stabilized poly(phenylene sulfide) and mixed therewith.

The following examples illustrate preferred embodiments of the present invention without any limitation of the scope of the invention.

**Example 1**

400 ml N-methylpyrrodone, 1 mole $Na_2S \cdot 9H_2O$, 0.8 mole sodium benzoate, and 0.3 mole NaOH were placed in a 1 liter autoclave. Dehydration was effected using a nitrogen stream under agitation. The system was heated until the internal temperature reached 200°C. After completing the dehydration, the internal temperature was lowered to 170°C, 1.01 moles p-dichlorobenzene were added, and pressurization to 0.4 MPa (mega Pascal) was effected using nitrogen. After raising the internal temperature to 270°C, polymerization was carried under agitation for two hours. Thereafter, the system was cooled, the contents were emptied into water, then poured through a 300 mesh wire net to collect the flake-like polymer. After repeated rinsing in dilute aqueous hydrochloric acid and washing with acetone, approximately 70 g white polymer was obtained. The degree of polymerization of the resultant polymer was determined to approximately 250 as measured by the light scattering method in chloronaphthalene at 210°C. 20 g polymer thus obtained, 1.5 g NaOH, 5 g sodium benzoate, 5 g of a reacting reagent as listed in Table 1 and 200 ml NMP were heated and stirred at 200°C in a nitrogen stream for two hours. After completing the reaction the polymer was washed with water, then washed with acetone, and the non-reacted reagents in the acetone washing solution were determined by gas chromatography for reverse calculation of the reagent constituent remaining in the polymer. To determine the stability of the polymer with respect to oxidizing cross-linking, the viscosity was determined before and after maintaining the polymer for two hours in air at 250°C. (The apparent density of the polymer was 0.36 $g/cm^3$ in each case, with almost no variation). The viscosity measurement was made using a Kokashiki flow tester at a temperature of 300°C, at a shear rate of 200 $sec^{-1}$.

Although the viscosity values differed depending on the reacting agents, the viscosity measurements after heating in air, confirmed that the poly(phenylene sulfide) according to the present invention has greatly increased stability as shown in Table 1.

**Table 1**

| Reacting reagent | Reaction rate (mole-%) | Viscosity (Pa·s) Before heating at 250°C | Viscosity (Pa·s) After heating at 250°C |
|---|---|---|---|
| 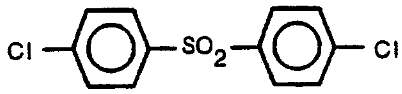 | 1.0 | 280 | 411 (1.5 times) |
| 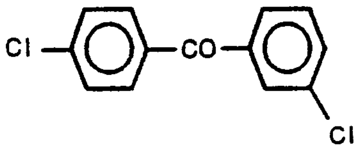 | 0.8 | 248 | 550 (2.2 times) |
| 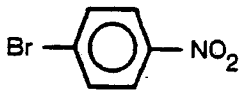 | 0.6 | 255 | 615 (2.4 times) |
| 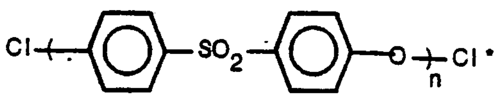 * | 1.8 | 268 | 537 (2.0 times) |
| None | - | 116 | 1350 (11.6 times) |

*Remark: Unprocessed poly(phenylene sulfide) was added to a system in which

4 g 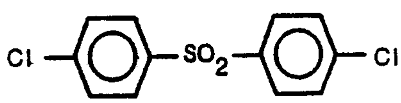 and 2.5 g 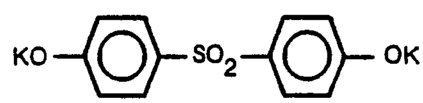

were preliminarily reacted in N-methylpyrrolidone at 200°C for 2 hours. The reaction rate was obtained by reverse calculation (n = 4 ~ 5) from the weight of polyether sulfone in the acetone rinsing solution.

For comparison,

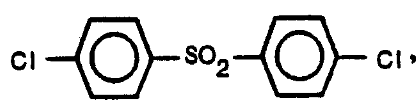,

in an amount equivalent to 5 mole-%, was blended with untreated poly(phenylene sulfide) and the viscosity was measured before and after heating at 250°C. The results indicate that a rapid increase in viscosity has occurred. In addition there was little difference when compared with polymers other than those of the present invention without reacting agents.

**Example 2**

Polymerization of poly(p-phenylene sulfide) was carried out in a manner similar to that used in Example 1 except that 60 mole-% sodium benzoate was used and the reaction time was increased to 3 hours at 270°C. Immediately after polymerization, the system was cooled to 250°C and 21.5 g N-methylpyrrolidone solution of diphenyl dichlorosulfone was added by means of a high pressure dropping system. The system was heated for one hour, and the polymer was recovered in a manner similar to that employed in Example 1. The degree of polymerization, determined as in Example 1, was found to 220. The viscosity of this polymer, which had an apparent density of 0.34 g/cm$^3$, was determined to be 112 Pa·s. After heating the polymer in air at 250°C for two hours the viscosity increased to only 180 Pa·s. Thus, an inexcessively large viscosity rise was not observed.

In Table 2, the viscosity variation of the polymer according to Example 2 due to various time in the molten state under a vacuum at 300°C is given in comparison with the corresponding values of untreated polymer obtained according to Example 1.

**Table 2**

| Heating Time (h) at 300°C | Viscosity Pa·s Example 2 | Viscosity Pa·s Example 1 |
|---|---|---|
| 0 | 112 | 116 |
| 4.0 | 128 | 71 |
| 15.0 | 124 | 42 |
| 24.0 | 55 | 39 |

The results shown in Table 2 indicate that the polymer according to the present invention is stabilized against polymer chain breakage.

By quenching the polymer thus obtained, after press molding at 300°C, a transparent amorphous film of about 200 μm was obtained. The film was simultaneously biaxially stretched 3.5 x 3.5 times using a film stretcher (T. M. Long Co.) and then, was thermally fixed for 60 seconds at 250°C at a fixed length. Thus a film having a thickness of 15 μm was obtained. Upon examination for gel formation as determined by placing the film between polarized films, it was found that the film was uniformly transparent, with almost no gel formation.

A film was produced from the untreated polymer of Example 1, using the method described above. In this untreated polymer film, several gels per 10 $cm^2$ were observed with visual examination. Films were produced from the polymer of Example 2 and from the untreated polymer of Example 1, and said films were maintained outdoors for ten days. The measured values of strength and of elongation are shown in Table3.

**Table 3**

| | Film of the present invention (Example 2) | | Untreated film (Example 1) | |
|---|---|---|---|---|
| | Strength ($kg/mm^2$) | Elongation (%) | Strength ($kg/mm^2$) | Elongation (%) |
| Initial value | 15.6 | 73 | 15.5 | 75 |
| After leaving outdoors for 10 days | 14.0 | 65 | 7.0 | 21 |

As is clearly demonstrated in Table 3, the film employing the polymer according to the present invention is remarkably superior in weatherability with respect to a film produced from conventional untreated poly(phenylene sulfide).

**Example 3**

Example 2 was repeated with the exception, substituting the sodium benzoate by 60 mole-% of lithium acetate. The polymer, treated with dichlorodiphenyl sulfone as in Example 2, was washed with water and dried. The polymer thus produced had a viscosity of 340 Pa·s. An amorphous 500 μm thick film was made using a melt press at a temperature of 320°C and a hear rate of 200 $sec^{-1}$, followed by water quenching using a water bath at about 10°C. The degree of polymerization was greater than 250 as measured before the addition of the dichlorodiphenyl sulfone. This transparent amorphous film was simultaneously biaxially stretched 3.5 x 3.5 times at 95°C, using a film stretcher (T. M. Long). A 37 μm thick biaxially oriented film was obtained. The stretched film was heat-set at a constant length at 250°C for 60 seconds. (Film A according to the present invention).

To compare the thermal endurance of the treated polymer film and a non-treated film, a portion of the polymerization solution, obtained before addition of the dichorodiphenyl sulfone, was separated, washed and dried. This non-treated polymer had a viscosity of 220 Pa·s at a temperature of 320°C and a shear rate of 200 $sec^{-1}$. The above mentioned non-treated polymer was formed to a biaxially oriented heat set film having a thickness of 35 μm in the same manner as the treated polymer. (Film B as reference film). The thermal endurance of each film was measured and the results are summarized in Table 4.

**Table 4**

| Aging time (h) at 220°C | Film A Strength (kg/mm²) | Film A Elongation (%) | Film B Strength (kg/mm²) | Film B Elongation (%) |
|---|---|---|---|---|
| 0 | 19.0 | 56.0 | 18.5 | 61.0 |
| 72 | 20.5 | 68.5 | 17.0 | 52.0 |
| 220 | 17.5 | 48.5 | 10.5 | 30.0 |
| 560 | 16.0 | 42.0 | 8.5 | 27.5 |
| 975 | 15.5 | 40.0 | 8.0 | 25.5 |
| 1500 | 11.5 | 35.0 | 5.5 | 18.0 |
| 1800 | 10.5 | 33.0 | 5.0 | 16.0 |

**Example 4**

95 wt.-% of a polymer prepared according to Example 1 and using

4.4'-diphenyl-dichlorosulfone, 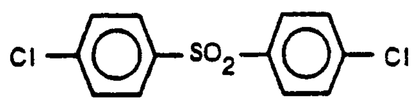

as the reacting agent, and 5 wt.-% of the polymer prepared according to Example 1 and using 4.4'- diphenyl-dichlorosulfone which had been heated in air at 250°C for 2 hours were mixed in the powdery state.

In a similar manner, 95 wt.-% of the untreated polymer according to Example 1 and 5 wt.-% of the untreated polymer which had been heated in air at 250°C for 2 hours were mixed.

Each mixture was melt-pressed at 300°C and quenched in water at 10°C to obtain 200 µm thick transparent films. Each film was simultaneously biaxially stretched 3.0 x 3.0 times, using a film stretcher (T. M. Long Co.), at 93 to 97°C.

The gel content of each film was evaluated under polarized light. Few gels were observed in the film prepared from the treated polymer, but a large number of gels were evaluated in the film prepared from the untreated polymer.

Both films produced transparent films after heat setting at 270°C for 30 seconds under restraint.

**Claims**

1. A stabilized poly(phenylene sulfide) comprising a main constituent consisting of at least 90 mole-% of recurring units

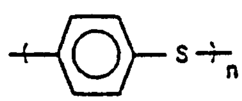

with n ⩾ 20 and further comprising a stabilizing agent, viz. an aromatic compound substituted with at least one electron attracting group, characterized in that said electron attracting group is selected from $-SO_2-$, -CO-, -CONH-, $-NO_2$, $-SO_3R$ and -COOR, wherein R represents H, $C_1$- to $C_8$-alkyl group, phenyl group, substituted phonyl group or alkali metal; the aromatic ring of said stabilizing agent is covalently directly bound to the backbone chain and/or to a branch chain of the poly(phenylene sulfide); and said covalently bound stabilizing agent is present in an amount from 0.05 to 10 mole-% per phenylene sulfide unit.

2. A stabilized poy(phenylene sulfide) according to claim 1, having a melting point from 250°C to 350°C, having a viscosity at 300°C greater than 10 Pa·s and/or having a shear rate of about 200 $s^{-1}$.

3. A stabilized poly(phenylene sulfide) according to claim 1 or 2, wherein the electron attracting group is $-SO_2-$ or -CO-.

4. A stabilized poly(phenylene sulfide) according to any one of the claims 1 or 3, formed to a film, or to molded article, or to a fiber or to a powder for encapsulation of electronic parts.

5. A method of preparing a stabilized poly(phenylene sulfide) according to any one of the claims 1 to 4, wherein a poly(phenylene sulfide) comprising a main constituent consisting of at least 90 mole-% of recurring units

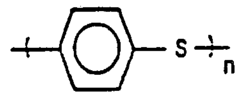

with n ⩾ 20 is reacted with 0.05 to 20 mole-% per said phenylene sulfide unit of a substituted aromatic compound having at least one halogen atom and at least one electron attracting group selected from $-SO_2-$, -CO-, -CONH-, $-NO_2$, $-SO_3R$ and -COOR, wherein R represents H, $C_1$- to $C_8$-alkyl group, phenyl group, substituted phenyl group or alkali metal, directly bound to said aromatic ring, in order to produce a covalent bond between the backbone chain and/or a branch chain of said poly(phenylene sulfide) and a carbon atom of said aromatic ring.

6. A method according to claim 5, wherein the substituted aromatic compound is selected from

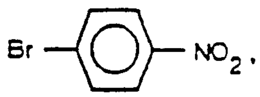

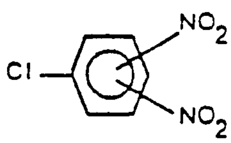

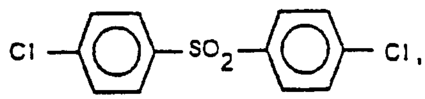

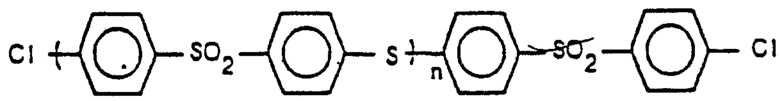 (n ⩾ 1),

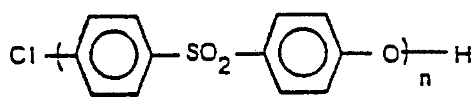 (n ⩾ 1).

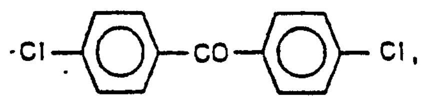

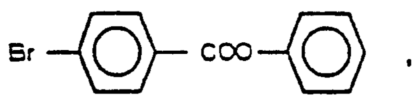

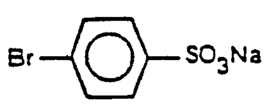 or

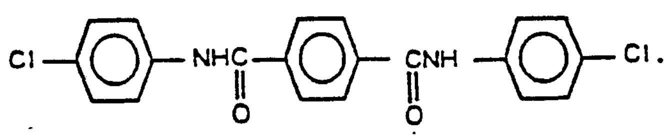

7. A method according to claim 5, wherein

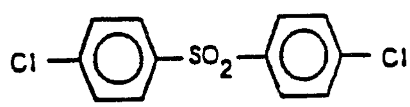

is used as substituted aromatic compound.

8. A method according to any one of the claims 5 to 7, wherein said substituted aromatic compound is introduced into the polymerization system during a later stage of preparationl of said poly(phenylene sulfide).

**Patentansprüche**

1. Ein stabilisiertes Polyphenylsulfid mit einem Hauptbestandteil, bestehend aus wenigstens 90 Mol-% aus wiederkehrenden Einheiten der Strukturformel

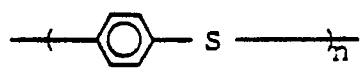

wobei n für eine ganze Zahl ⩾ 20 steht, das Zusätzlich ein Stabilisierungsmittel enthält, nämlich eine aromatische, mit wenigstens einer Elektronen anziehenden Gruppe substituierte Verbindung,
dadurch gekennzeichnet, daß
diese Elektronen anziehende Gruppe ausgewählt ist aus $-SO_2-$, -CO-, -CONH-, $-NO_2$, $-SO_3R$ und COOR, wobei R für einen Wasserstoffrest, eine $C_1$-$C_8$-Alkylgruppe, eine Phenylgruppe, eine substituierte Phenylgruppe oder einen Alkalimetalirest steht;
der aromatische Ring dieses Stabilisierungsmittels direkt kovalent an die Hauptkette und/oder an eine Seitenkette des Polyphenylsulfid gebunden ist; und
dieses kovalent gebundene Stabilisierungsmittel in einem Anteil von 0,05 bis 10 Mol-% pro Phenylensulfid-Einheit vorhanden ist.

2. Ein stabilisiertes Polyphenylensulfid nach Anspruch 1, mit einem Schmelzpunkt von 250° C bis 350° C, mit einer Viskosität bei 300° C größer als 10 Pa x s
und/oder
mit einer Schergeschwindigkeit von ungefähr 200 $sec^{-1}$.

3. Ein stabilisiertes Polyphenylensulfid nach Anspruch 1 oder 2,
wobei die Elektronen anziehende Gruppe $-SO_2-$ oder -CO- ist.

4. Ein stabilisiertes Polyphenylensulfid nach einem der Ansprüche 1 bis 3,
in der Form einer Folie, eines Formkörpers, einer Faser oder eines Pulvers zum Einkapseln von elektronischen Bauteilen.

5. Ein Verfahren zur Herstellung eines stabilisierten Polyphenylsulfids nach einem der Ansprüche 1 bis 4,
wobei ein Polyphenylensulfid mit einem Hauptbestandteil, bestehend zu Wenigstens 90 Mol-% aus wiederkehrenden Einheiten der Strukturformel

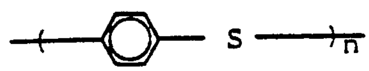

wobei n für eine ganze Zahl ⩾ 20 steht,
mit einer substituierten aromatischen Verbindung, die - direkt an den aromatischen Ring gebunden Wenigstens ein Halogenatom und wenigstens eine Elektronen anziehende Gruppe ausgewählt aus $-SO_2-$ -CO, -CONH-, $-NO_2$, $-SO_3R$ und -COOR, wobei R für einen Wasserstoffrest, eine $C_1$-$C_8$-Alkylgruppe, eine Phenylgruppe, eine substituierte Phenylgruppe oder einen Alkalimetallrest steht, in einem Anteil von 0,05 bis 20 Mol-% pro Phenylensulfid-Einheit umgesetzt wird, um eine kovalente Bindung zwischen der Hauptkette und/oder einer Seitenkette des Polyphenylensulfid und einem Kohlenstoffatom des aromatischen Ringes dieser substituierten aromatischen Verbindung zu erzeugen.

6. Ein Verfahren nach Anspruch 5,
wobei die substituierte aromatische Verbindung eine der nachstehenden Verbindungen ist

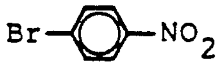,

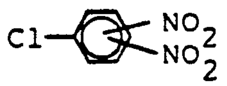,

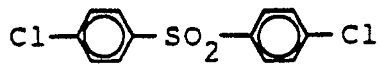,

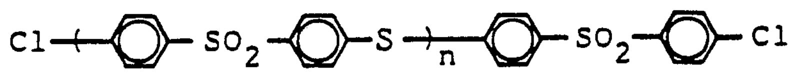 (n ≧ 1),

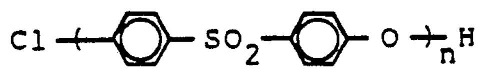 (n ≧ 1),

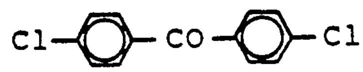,

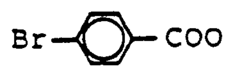 ,

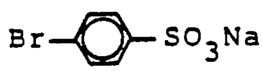 oder

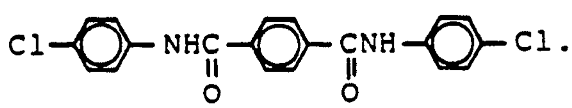.

7. Ein Verfahren nach Anspruch 5, 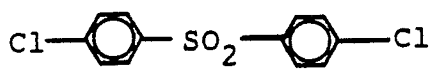
wobei
als substituierte aromatische Verbindung eingesetzt wird.

8. Ein Verfahren nach einem der Ansprüche 5 bis 7,
wobei die substituierte aromatische Verbindung in einem späten Stadium der Polyphenylensulfid-Herstellung in das Polymerisationssystem eingeführt wird.

**Revendications**

1. Polysulfure de phénylène stabilisé comprenant un élément principal consistant au moins de 90 Mol-% des motifs

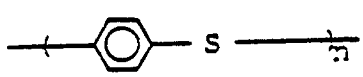

avec n ⩾ 20 et
comprenant en outre un agent stabilisant, à savoir un composé aromatique substitué par au moins un groupe attirant les électrons, caractérisé en ce que ce groupe attirant les électrons est choisi parmi $-SO_2-$, -CO-, -CONH-, $-NO_2$, $-SO_3R$ et -COOR, où R représente H, un groupe alkyle en $C_1$ à $C_8$ un groupe phényle, un groupe phényle substitué ou un métal alcalin; le cycle aromatique de cet agent stabilisant est lié directement par covalence à la chaîne du squelette et/ou à une chaîne ramifiée du polysulfure de phénylène, et cet agent stabilisant covalentement lié est présent dans une proportion de 0,05 à 10 mol-% par motif sulfure de phénylène.

2. Polysulfure de phénylene stabilisé conforme à la revendication 1,
ayant un point de fusion de 250°C à 350°C, ayant une viscosité à 300°C supérieure à 10 Pa·s et/ou ayant un

gradient de cisaillement d'environ 200 $s^{-1}$.

3. Polysulfure de phénylène stabilisé selon les revendications 1 ou 2, dans lequel le groupe attirant les électrons est $-SO_2-$ ou -CO-.

4. Polysulfure de phénylène stabilisé selon l'une quelconque des revendications 1 à 3, transformé en une pellicule ou en un article moulé, ou en une fibre ou en une poudre pour l'encapsulage de pièces électroniques.

5. Procédé de préparation d'un polysulfure de phénylène stabilisé selon l'une quelconque des revendications 1 à 4, dans lequel un polysulfure de phénylène avec un élément principal consistant au moins de 90 mol-% principalement constitué de motifs

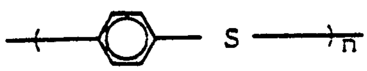

avec $n \geqslant 20$ est mis à réagir avec 0,05 à 20 mol-% par motif sulfure de phénylène d'un composé aromatique substitué ayant au moins un atome d'halogène et au moins un groupe attirant les électrons choisi parmi $-SO_2-$, -CO-, -CONH-, $-NO_2-$, $-SO_3R$ et -COOR, où R représente H, un groupe alkyle en $C_1$ à $C_8$ un groupe phényle, un groupe phényle substitué ou un métal alcalin, directement lié au cycle aromatique, pour produire une liaison covalente entre la chaîne de squelette et/ou une chaîne ramifiée de ce polysulfure de phénylène et un atome de carbone de ce cycle aromatique.

6. Procédé selon la revendication 5, dans lequel le composé aromatique substitué est choisi parmi:

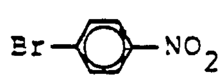,

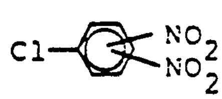,

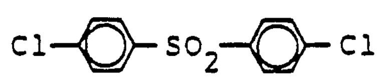,

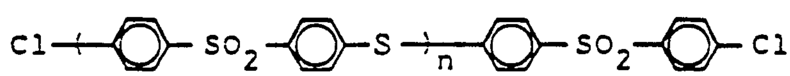 (n ≧ 1),

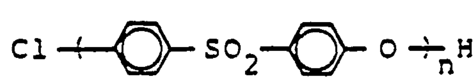 (n ≧ 1),

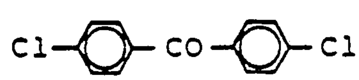,

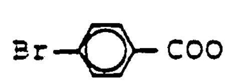,

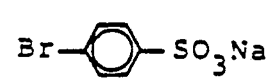 ou

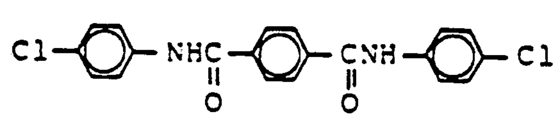.

7. Procédé selon la revendication 5, dans lequel 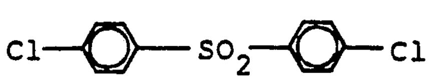 est utilisé comme composé aromatique substitué.

8. Procédé selon l'une quelconque des revendications 5 à 7, dans lequel ce composé aromatique substitué est introduit dans le système de polymérisation à une phase avancée au cours de la préparation de ce polysulfure de phénylène.